# EUROPEAN PATENT APPLICATION

(11) **EP 4 589 823 A1**
(43) Date of publication of application: **23.07.2025**
(21) Application number: 24218280.6
(22) Date of filing: 09.12.2024
(51) Int. Cl.: H02K 5/20, H02K 9/19

(54) **MOTOR UNIT**

(30) Priority: 18.01.2024 JP 2024006175
(71) Applicant: TOYOTA JIDOSHA KABUSHIKI KAISHA, Aichi-ken, 471-8571 (JP)
(72) Inventor: TAKAHARA, Yoshihiro, Toyota-shi 471-8571 (JP); IMAKAWA, Takashi, Toyota-shi 471-8571 (JP); ASAI, Takanori, Toyota-shi 471-8571 (JP); AWATA, Hideya, Toyota-shi 471-8571 (JP); OURA, Daichi, Toyota-shi 471-8571 (JP); HARADA, Hiroyasu, Toyota-shi 471-8571 (JP); MAKIDO, Yasuhiro, Toyota-shi 471-8571 (JP)
(74) Representative: TBK

(57) **Abstract**

A motor unit (10) includes a channel. The channel includes: a supply channel (30) through which a cooling medium is supplied; a discharge channel (32) through which the cooling medium is discharged; a first cooling medium system (80) provided in a first range from the supply channel (30) toward one side in a circumferential direction to the discharge channel (32); and a second cooling medium system (82) provided in a second range from the supply channel (30) toward the other side in the circumferential direction to the discharge channel (32). The first cooling medium system (80) includes a first cooling medium channel (90) that connects the supply channel (30) and the discharge channel (32), and a second cooling medium channel (92) that is independent of the first cooling medium channel (90) and that connects the supply channel (30) and the discharge channel (32).

## Description

### BACKGROUND OF THE INVENTION

### 1. Field of the Invention

The technique disclosed in the present specification relates to motor units.

### 2. Description of Related Art

WO2023/074571 discloses a motor unit including a motor extending along a central axis, a housing that houses the motor, and a channel provided in the housing and configured to allow a cooling medium to flow therethrough. The channel includes: a supply channel through which a cooling medium is supplied; a discharge channel through which the cooling medium is discharged and that is located at a different position in the circumferential direction of the housing from the supply channel; a first cooling medium system provided in a first range from the supply channel toward one side in the circumferential direction to the discharge channel; and a second cooling medium system provided in a second range from the supply channel toward the other side in the circumferential direction to the discharge channel.

### SUMMARY OF THE INVENTION

In the first cooling medium system of the motor unit, the cooling capacity near the discharge channel is lower than the cooling capacity near the supply channel. It is desired to reduce the difference between the cooling capacity near the supply channel and the cooling capacity near the discharge channel in the first cooling medium system.

The present specification provides a technique that can improve the cooling performance of a motor unit.

In a first aspect of the present technique, a motor unit includes: a motor extending along a central axis; a housing that houses the motor; and a channel provided in the housing and configured to allow a cooling medium to flow through the channel in a circumferential direction of the housing. The channel includes: a supply channel through which the cooling medium is supplied; a discharge channel through which the cooling medium is discharged and that is provided at a different position in the circumferential direction from the supply channel; a first cooling medium system provided in a first range that is a range from the supply channel toward one side in the circumferential direction to the discharge channel; and a second cooling medium system provided in a second range that is a range from the supply channel toward another side in the circumferential direction to the discharge channel. The first cooling medium system includes a first cooling medium channel that connects the supply channel and the discharge channel, and a second cooling medium channel that is independent of the first cooling medium channel and that connects the supply channel and the discharge channel.

The above configuration can reduce pressure loss in the first cooling medium system compared to a configuration in which the first cooling medium system includes only one independent cooling medium channel. Therefore, a larger amount of cooling medium can be supplied to the first cooling medium system. This can reduce the difference between the cooling capacity near the supply channel and the cooling capacity near the discharge channel in the first cooling medium system. As a result, the cooling performance of the motor unit can be improved.

According to a second aspect, in the first aspect, a first length that is a length in the circumferential direction of the first range may be greater than a second length that is a length in the circumferential direction of the second range.

When the first length is greater than the second length, the difference between the cooling capacity near the supply channel and the cooling capacity near the discharge channel in the first cooling medium system is larger than the difference between the cooling capacity near the supply channel and the cooling capacity near the discharge channel in the second cooling medium system. With the above configuration, a larger amount of cooling medium can be supplied to the first cooling medium system. This can reduce the difference in cooling capacity in the first cooling medium system where the difference in cooling capacity is relatively large.

According to a third aspect, in the first or second aspect, each of the first cooling medium channel and the second cooling medium channel may include a plurality of axial channels extending in an axial direction of the housing, and at least one circumferential channel extending in the circumferential direction and connecting the axial channels in series.

It is conceivable that each of the first cooling medium channel and the second cooling medium channel includes a plurality of channels extending in the circumferential direction of the housing and at least one channel extending in the axial direction. With the above configuration, the first cooling medium channel and the second cooling medium channel can be more easily formed compared to a configuration in which the channels extending in the circumferential direction of the housing is connected in series by the at least one channel extending in the axial direction in each of the first cooling medium channel and the second cooling medium channel.

According to a fourth aspect, in the third aspect, the housing may include a cylindrical middle housing, a first cover connected to one end in the axial direction of the middle housing, and a second cover connected to the other end in the axial direction of the middle housing. The axial channels may be provided in the middle housing, and the at least one circumferential channel may be provided in either the first cover or the second cover.

With the above configuration, the first cooling medium channel and the second cooling medium channel can be more easily formed compared to a configuration in which the housing is composed of two members.

According to a fifth aspect, in the fourth aspect, all of the axial channels may be positioned at equal distances from the central axis of the cylindrical middle housing. The at least one circumferential channel may include a first circumferential channel that connects adjacent two of the axial channels, and a second circumferential channel that connects two of the axial channels that are located on both sides of the adjacent two axial channels.

With the above configuration, the axial channels can be more easily formed compared to a configuration in which the axial channels are provided at different positions in a radial direction.

According to a sixth aspect, in the fourth or fifth aspect, the first circumferential channel may be at least partially adjacent to the second circumferential channel in a radial direction in the first cover and the second cover.

With the above configuration, a plurality of circumferential channels can be more easily formed compared to a configuration in which the first circumferential channel and the second circumferential channel are at least partially adjacent to each other in the axial direction.

According to a seventh aspect, in any one of the first to sixth aspect, the second cooling medium system may include a third cooling medium channel that connects the supply channel and the discharge channel, and a fourth cooling medium channel that is independent of the third cooling medium channel and that connects the supply channel and the discharge channel.

The above configuration can reduce overall pressure loss in the motor unit. Therefore, the cooling capacity of the motor unit can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a drive device 2;
FIG. 2 is a rear view of a front cover 22 of a housing 12;
FIG. 3 is a front view of a rear cover 24 of the housing 12;
FIG. 4 is a schematic diagram of a cooling medium channel in the housing 12; and
FIG. 5 is a schematic diagram of a cooling medium channel according to a first modification.

### DETAILED DESCRIPTION OF EMBODIMENTS

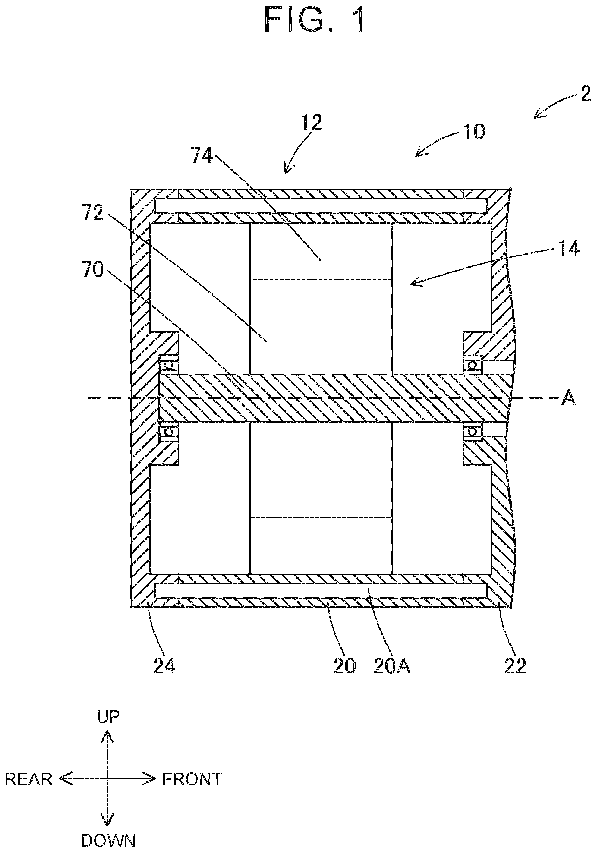

A drive device 2 will be described with reference to FIGS. 1 to 4. The drive device 2 is mounted on an electrified vehicle etc. The front-rear, left-right, and up-down directions in FIGS. 1 to 3 are shown for better understanding of description, and are not intended to define actual directions. In the following description, "clockwise" and "counterclockwise" are the directions as the drive device 2 is viewed from the rear.

As shown in FIG. 1, the drive device 2 includes a motor unit 10 and a gear unit (not shown). The gear unit is provided in front of the motor unit 10. The motor unit 10 includes a housing 12 and a motor 14.

The housing 12 includes a middle housing 20, a front cover 22, and a rear cover 24. The middle housing 20 has a cylindrical shape. The middle housing 20 extends in the direction of an axis A (hereinafter referred to as "axis A direction"). The axis A is the central axis of the motor 14. Both front and rear ends of the middle housing 20 are open. The middle housing 20 has a plurality of axial channels 20A extending through the middle housing 20. The axial channels 20A extend in the axis A direction.

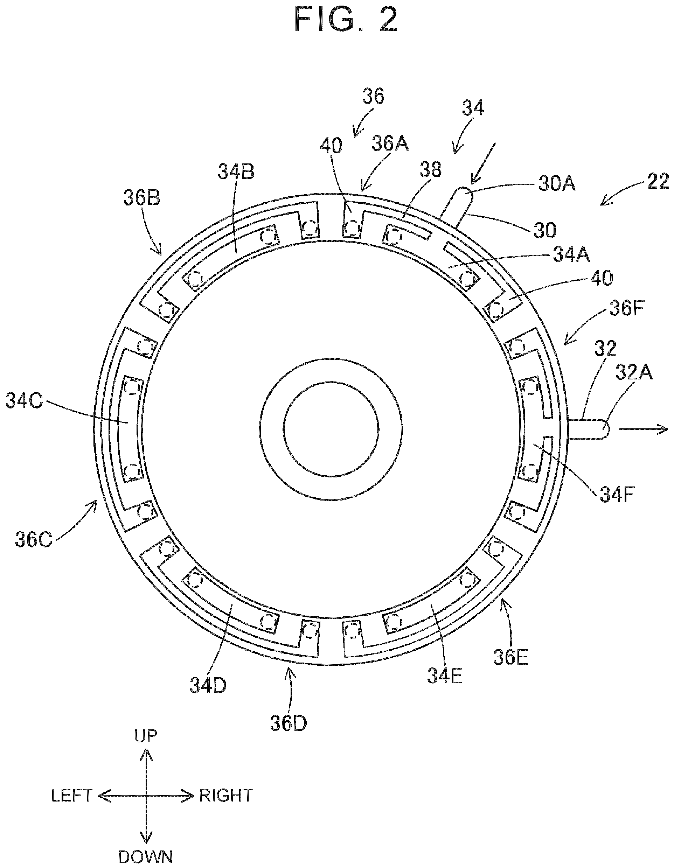

As shown in FIG. 2, the front cover 22 includes: a supply channel 30 having a cooling medium supply port 30A; a discharge channel 32 having a cooling medium discharge port 32A; a plurality of first inner channels 34A to 34F; and a plurality of first outer channels 36A to 36F. Hereinafter, the first inner channels 34A to 34F and the first outer channels 36A to 36F are sometimes collectively referred to as the "first inner channels 34" and the "first outer channels 36", respectively. The first inner channels 34 are arranged in the circumferential direction. The first inner channels 34 extend in the circumferential direction. Front ends of the axial channels 20A of the middle housing 20 are connected to both circumferential ends of each of the first inner channels 34. That is, each of the first inner channels 34 connects two axial channels 20A that are adjacent to each other in the circumferential direction.

The first outer channels 36 are arranged in the circumferential direction. Each of the first outer channels 36 includes a first connecting channel 38 and two first radial channels 40. For simplicity, the signs of the first connecting channel 38 and the two first radial channels 40 of each of the first outer channels 36B to 36F are not shown in the figure. The first outer channels 36A to 36F correspond to the first inner channels 34A to 34F, respectively. The first connecting channel 38 is provided radially outward of the first inner channel 34 and extends in the circumferential direction. The end on the clockwise side of the first connecting channel 38 is located clockwise with respect to the end on the clockwise side of the first inner channel 34. The end on the counterclockwise side of the first connecting channel 38 is located counterclockwise with respect to the end on the counterclockwise side of the first inner channel 34. One of the two first radial channels 40 extends radially inward from the end on the counterclockwise side of the first connecting channel 38, and the other extends radially inward from the end on the clockwise side of the first connecting channel 38. The radially inner ends of the two first radial channels 40 are located at the same position in the radial direction as the first inner channel 34. The axial channels 20A of the middle housing 20 are connected to the radially inner ends of the two first radial channels 40. That is, the first outer channel 36 connects two axial channels 20A located on both sides of the two axial channels 20A connected by the first inner channel 34.

The supply channel 30 is provided in the middle portions in the circumferential direction of the first inner channel 34A and the first outer channel 36A. The supply channel 30 connects the cooling medium supply port 30A, the first inner channel 34A, and the first outer channel 36A. The discharge channel 32 is provided in the middle portions in the circumferential direction of the first inner channel 34F and the first outer channel 36F. The discharge channel 32 connects the cooling medium discharge port 32A, the first inner channel 34F, and the first outer channel 36F.

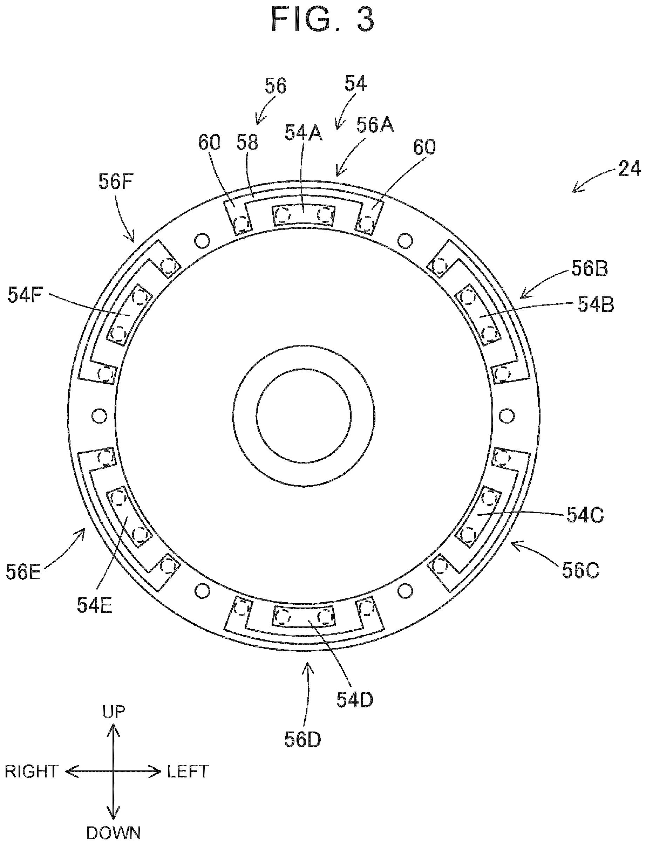

As shown in FIG. 3, the rear cover 24 includes a plurality of second inner channels 54A to 54F and a plurality of second outer channels 56A to 56F. Hereinafter, the second inner channels 54A to 54F and the second outer channels 56A to 56F are sometimes collectively referred to as the "second inner channels 54" and the "second outer channels 56", respectively. The second inner channels 54 are arranged in the circumferential direction. The second inner channels 54 extend in the circumferential direction. Rear ends of the axial channels 20A of the middle housing 20 are connected to both circumferential ends of each of the second inner channels 54. That is, each of the second inner channels 54 connects two axial channels 20A that are adjacent to each other in the circumferential direction.

The second outer channels 56 are arranged in the circumferential direction. Each of the second outer channels 56 includes a second connecting channel 58 and two second radial channels 60. For simplicity, the signs of the second connecting channel 58 and the two second radial channels 60 of each of the second outer channels 56B to 56F are not shown in the figure. The second outer channels 56A to 56F correspond to the second inner channels 54A to 54F, respectively. The second connecting channel 58 is provided radially outward of the second inner channel 54 and extends in the circumferential direction. The end on the clockwise side of the second connecting channel 58 is located clockwise with respect to the end on the clockwise side of the second inner channel 54. The end on the counterclockwise side of the second connecting channel 58 is located counterclockwise with respect to the end on the counterclockwise side of the second inner channel 54. One of the two second radial channels 60 extends radially inward from the end on the counterclockwise side of the second connecting channel 58, and the other extends radially inward from the end on the clockwise side of the second connecting channel 58. The radially inner ends of the two second radial channels 60 are located at the same position in the radial direction as the second inner channel 54. The axial channels 20A of the middle housing 20 are connected to the radially inner ends of the two second radial channels 60. That is, the second outer channel 56 connects two axial channels 20A located on both sides of the two axial channels 20A connected by the second inner channel 54.

As shown in FIG. 1, the motor 14 extends along the central axis A. The motor 14 is housed in the housing 12. The motor 14 includes a motor shaft 70, a rotor 72, and a stator 74. The motor shaft 70 extends in the axis A direction. The motor shaft 70 is rotatably supported by the front cover 22 and the rear cover 24 of the housing 12 via bearings. The rotor 72 is fixed to the motor shaft 70. The stator 74 is fixed to the inner wall of the middle housing 20 of the housing 12 by shrink fitting etc.

A high voltage current flows through a coil (not shown) of the stator 74. As a result, the stator 74 generates heat. A cooling medium flows through channels in the housing 12 to cool the stator 74.

### (Channels in Housing 12)

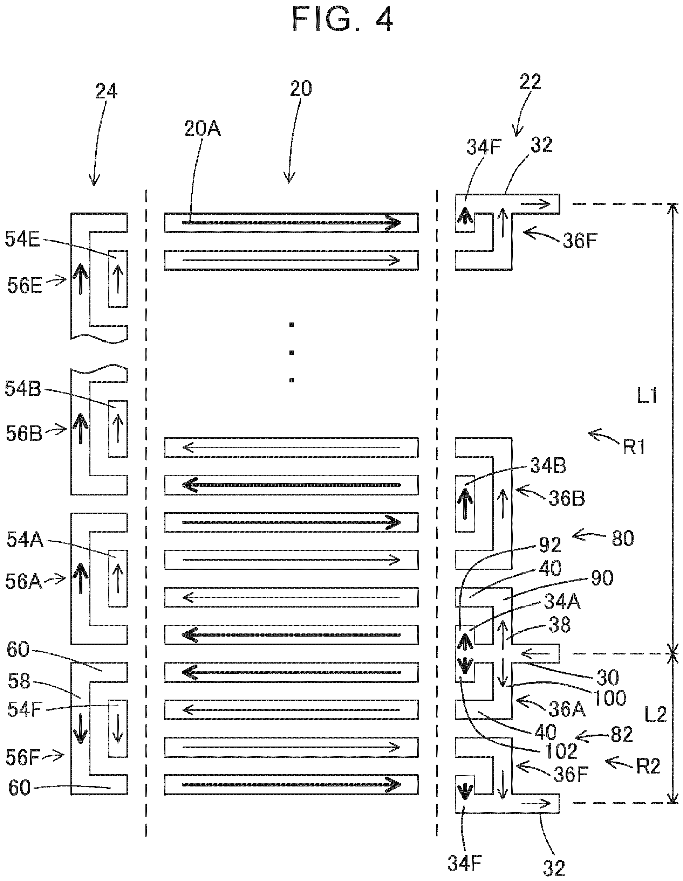

The channels in the housing 12 will be described with reference to FIGS. 2 to 4. FIG. 4 is a net diagram of the channels in the housing 12. For better understanding, the positions in the left-right direction of the first inner channels 34 and the positions in the left-right direction of the first connecting channels 38 of the first outer channels 36 are shown offset from each other in FIG. 4. The positions in the left-right direction of the second inner channels 54 and the positions in the left-right direction of the second connecting channels 58 of the second outer channels 56 are also shown offset from each other.

As shown in FIG. 4, the channels in the housing 12 include the supply channel 30, the discharge channel 32, a first cooling medium system 80, and a second cooling medium system 82. The first cooling medium system 80 is provided in a first range R1 from the supply channel 30 counterclockwise in the circumferential direction (upward in FIG. 4) to the discharge channel 32. The second cooling medium system 82 is provided in a second range R2 from the supply channel 30 clockwise in the circumferential direction (downward in FIG. 4) to the discharge channel 32. A first length L1 that is the length in the circumferential direction of the first range R1 is greater than a second length L2 that is the length in the circumferential direction of the second range R2.

The first cooling medium system 80 includes a first cooling medium channel 90 and a second cooling medium channel 92. Each of the first cooling medium channel 90 and the second cooling medium channel 92 connects the supply channel 30 and the discharge channel 32. In FIG. 4, the direction in which the cooling medium flows in the first cooling medium channel 90 is shown by thin arrows, and the direction in which the cooling medium flows in the second cooling medium channel 92 is shown by thick arrows. The first cooling medium channel 90 is composed of a portion on the counterclockwise side of the first outer channel 36A of the front cover 22, the first outer channels 36B to 36E of the front cover 22, a portion on the clockwise side of the first outer channel 36F, the second inner channels 54A to 54E of the rear cover 24, and the axial channels 20A connecting the channels of the front cover 22 with the channels of the rear cover 24. That is, the axial channels 20A in the first cooling medium channel 90 are connected in series by the first outer channels 36 and the second inner channels 54. The second cooling medium channel 92 is composed of a portion on the counterclockwise side of the first inner channel 34A of the front cover 22, the first inner channels 34B to 34E of the front cover 22, a portion on the clockwise side of the first inner channel 34F, the second outer channels 56A to 56E of the rear cover 24, and the axial channels 20A connecting the channels of the front cover 22 with the channels of the rear cover 24. That is, the axial channels 20A in the second cooling medium channel 92 are connected in series by the first inner channels 34 and the second outer channels 56. The first cooling medium channel 90 and the second cooling medium channel 92 do not intersect with each other in the first range R1. That is, the first cooling medium channel 90 and the second cooling medium channel 92 are independent channels. In the first range R1, the cooling medium flows in the first cooling medium channel 90 and the second cooling medium channel 92 in a meandering manner in the axis A direction.

The second cooling medium system 82 includes a third cooling medium channel 100 and a fourth cooling medium channel 102. Each of the third cooling medium channel 100 and the fourth cooling medium channel 102 connects the supply channel 30 and the discharge channel 32. In FIG. 4, the direction in which the cooling medium flows in the third cooling medium channel 100 is shown by thin arrows, and the direction in which the cooling medium flows in the fourth cooling medium channel 102 is shown by thick arrows. The third cooling medium channel 100 is composed of a portion on the clockwise side of the first outer channel 36A of the front cover 22, a portion on the counterclockwise side of the first outer channel 36F, the second inner channel 54F of the rear cover 24, and the axial channels 20A connecting the channels of the front cover 22 with the channels of the rear cover 24. That is, the axial channels 20A in the third cooling medium channel 100 are connected in series by the first outer channels 36 and the second inner channel 54. The fourth cooling medium channel 102 is composed of a portion on the clockwise side of the first inner channel 34A of the front cover 22, a portion on the counterclockwise side of the first inner channel 34F, the second outer channel 56F of the rear cover 24, and the axial channels 20A connecting the channels of the front cover 22 with the channels of the rear cover 24. That is, the axial channels 20A in the fourth cooling medium channel 102 are connected in series by the first inner channels 34 and the second outer channel 56. The third cooling medium channel 100 and the fourth cooling medium channel 102 do not intersect with each other in the second range R2. That is, the third cooling medium channel 100 and the fourth cooling medium channel 102 are independent channels. In the second range R2, the cooling medium flows in the third cooling medium channel 100 and the fourth cooling medium channel 102 in a meandering manner in the axis A direction.

As described above and shown in FIGS. 1 and 4, the motor unit 10 includes the motor 14 extending in the axis A direction, the housing 12 that houses the motor 14, and the channels provided in the housing 12 and configured to allow the cooling medium to flow therethrough in the circumferential direction of the housing 12 (example of the "circumferential direction"). The channels includes: the supply channel 30 through which the cooling medium is supplied; the discharge channel 32 through which the cooling medium is discharged and that is located at a different position in the circumferential direction from the supply channel 30; the first cooling medium system 80 provided in the first range R1; and the second cooling medium system 82 provided in the second range R2. The first cooling medium system 80 includes: the first cooling medium channel 90 connecting the supply channel 30 and the discharge channel 32; and the second cooling medium channel 92 independent of the first cooling medium channel 90 and connecting the supply channel 30 and the discharge channel 32.

The above configuration can reduce pressure loss in the first cooling medium system 80 compared to a configuration in which the first cooling medium system 80 includes only one independent cooling medium channel. Therefore, a larger amount of cooling medium can be supplied to the first cooling medium system 80. This can reduce the difference between the cooling capacity near the supply channel 30 and the cooling capacity near the discharge channel 32 in the first cooling medium system 80. As a result, the cooling performance of the motor unit 10 can be improved.

As shown in FIG. 4, the first length L1 that is the length in the circumferential direction of the first range R1 is greater than the second length L2 that is the length in the circumferential direction of the second range R2.

When the first length L1 is greater than the second length L2, the difference between the cooling capacity near the supply channel 30 and the cooling capacity near the discharge channel 32 in the first cooling medium system 80 is larger than the difference between the cooling capacity near the supply channel 30 and the cooling capacity near the discharge channel 32 in the second cooling medium system 82. With the above configuration, a larger amount of cooling medium can be supplied to the first cooling medium system 80. This can reduce the difference in cooling capacity in the first cooling medium system 80 where the difference in cooling capacity is relatively large.

As shown in FIG. 4, each of the first cooling medium channel 90 and the second cooling medium channel 92 includes: the axial channels 20A extending in the axial direction of the housing 12; and at least one circumferential channel extending in the circumferential direction (e.g., the first inner channel 34, the first outer channel 36, the second inner channel 54, the second outer channel 56). In each of the first cooling medium channel 90 and the second cooling medium channel 92, the axial channels 20A are connected in series by the at least one circumferential channel.

It is conceivable that each of the first cooling medium channel 90 and the second cooling medium channel 92 includes a plurality of channels extending in the circumferential direction of the housing 12 and at least one channel extending in the axis A direction. With the above configuration, the first cooling medium channel 90 and the second cooling medium channel 92 can be more easily formed compared to a configuration in which the channels extending in the circumferential direction of the housing 12 is connected in series by the at least one channel extending in the axis A direction.

As shown in FIG. 1, the housing 12 includes: the cylindrical middle housing 20; the front cover 22 (example of the "first cover") connected to the front end (example of "one end") in the axis A direction of the middle housing 20; and the rear cover 24 (example of the "second cover") connected to the rear end (example of the "other end") in the axis A direction of the middle housing 20. The axial channels 20A are provided in the middle housing 20, and the at least one circumferential channel is provided in either the front cover 22 or the rear cover 24.

With the above configuration, the first cooling medium channel 90 and the second cooling medium channel 92 can be more easily formed compared to a configuration in which the housing 12 is composed of two members.

As shown in FIGS. 2 and 3, all of the axial channels 20A are provided at the same position in the radial direction. In other words, all of the axial channels (20A) are positioned at equal distances from the central axis of the cylindrical middle housing. As shown in FIG. 4, the at least one circumferential channel includes: the first inner channel 34 or the second inner channel 54 (example of the "first circumferential channel") that connects two axial channels 20A located adjacent to each other; and the first outer channel 36 or the second outer channel 56 (example of the "second circumferential channel") that connects two axial channels 20A located on both sides of the two axial channels 20A.

With the above configuration, the axial channels 20A can be more easily formed compared to a configuration in which the axial channels 20A are provided at different positions in the radial direction.

As shown in FIG. 4, in the front cover 22 or the rear cover 24, the first inner channels 34 and the second inner channels 54 are at least partially adjacent to the first outer channels 36 and the second outer channels 56, respectively.

With the above configuration, a plurality of circumferential channels can be more easily formed compared to a configuration in which the first inner channels 34 and the second inner channels 54 are at least partially adjacent to the first outer channels 36 and the second outer channels 56 in the axis A direction, respectively.

As shown in FIG. 4, the second cooling medium system 82 includes: the third cooling medium channel 100 that connects the supply channel 30 and the discharge channel 32; and the fourth cooling medium channel 102 that is independent of the third cooling medium channel 100 and that connects the supply channel 30 and the discharge channel 32.

The above configuration can reduce overall pressure loss in the motor unit 10. Therefore, the cooling capacity of the motor unit 10 can be improved.

Although specific examples of the technique disclosed in the present specification have been described in detail above, these are merely illustrative, and are not intended to limit the scope of the claims. The technique described in the claims includes various modifications and alterations of the specific examples illustrated above.

### First Modification

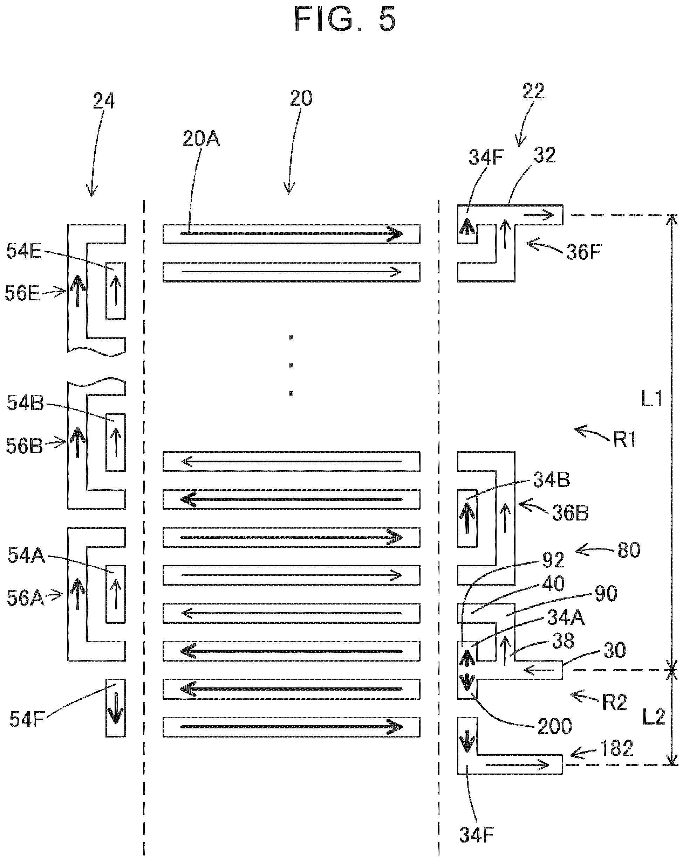

As shown in FIG. 5, a second cooling medium system 182 may include only one cooling medium channel 200. In this modification, the first outer channel 36A of the front cover 22 does not include the first radial channel 40 on the clockwise side, and the first outer channel 36F of the front cover 22 does not include the first radial channel 40 on the clockwise side. The rear cover 24 does not include the second outer channel 56F. With this configuration, a larger amount of cooling medium can be supplied to the first cooling medium system 80 compared to a configuration in which each of the first cooling medium system and the second cooling medium system includes only one channel. This can reduce the difference between the cooling capacity near the supply channel 30 of the first cooling medium system 80 and the cooling capacity near the discharge channel 32 of the first cooling medium system 80. This can also reduce the difference between the cooling capacity of the first cooling medium system 80 and the cooling capacity of the second cooling medium system 182.

### Second Modification

The first length L1 of the first range R1 and the second length L2 of the second range R2 may be the same.

### Third Modification

The first cooling medium system 80 may include three or more independent cooling medium channels. The second cooling medium system 82 may also include three or more independent cooling medium channels.

### Fourth Modification

The first outer channel 36 may not include two first radial channels 40. The second outer channel 56 may not include two second radial channels 60. In this modification, the axial channels 20A of the middle housing 20 are tilted with respect to the axis A direction.

### Fifth Modification

The front cover 22 may not include the first outer channel 36A. In this modification, the first inner channel 34A extends between the circumferential positions of the first radial channels 40 at both ends of the first outer channel 36A.

### Sixth Modification

The first cooling medium channel 90 and the second cooling medium channel 92 may be channels that meander in the circumferential direction.

The technical elements illustrated in the present specification or the drawings exhibit technical utility alone or in various combinations, and are not limited to the combinations set forth in the claims as originally filed. The technique illustrated in the present specification or the drawings may achieve a plurality of objects at the same time, and has technical utility by achieving one of the objects.

## Claims

1. A motor unit (10) comprising:
a motor (14) extending along a central axis;
a housing (12) that houses the motor (14); and
a channel provided in the housing (12) and configured to allow a cooling medium to flow through the channel in a circumferential direction of the housing (12), wherein:
the channel includes
a supply channel (30) through which the cooling medium is supplied,
a discharge channel (32) through which the cooling medium is discharged and that is provided at a different position in the circumferential direction from the supply channel (30),
a first cooling medium system (80) provided in a first range, the first range being a range from the supply channel (30) toward one side in the circumferential direction to the discharge channel (32), and
a second cooling medium system (82) provided in a second range, the second range being a range from the supply channel (30) toward another side in the circumferential direction to the discharge channel (32); and
the first cooling medium system (80) includes a first cooling medium channel (90) that connects the supply channel (30) and the discharge channel (32), and a second cooling medium channel (92) that is independent of the first cooling medium channel (90) and that connects the supply channel (30) and the discharge channel (32).

2. The motor unit (10) according to claim 1, wherein a first length that is a length in the circumferential direction of the first range is greater than a second length that is a length in the circumferential direction of the second range.

3. The motor unit (10) according to claim 1, wherein each of the first cooling medium channel (90) and the second cooling medium channel (92) includes a plurality of axial channels (20A) extending in an axial direction of the housing (12), and at least one circumferential channel (34, 36, 54, 56) extending in the circumferential direction, the at least one circumferential channel (34, 36, 54, 56) connecting the axial channels (20A) in series.

4. The motor unit (10) according to claim 3, wherein:
the housing (12) includes a cylindrical middle housing (20), a first cover (22) connected to one end in the axial direction of the middle housing (20), and a second cover (24) connected to another end in the axial direction of the middle housing (20);
the axial channels (20A) are provided in the middle housing (20); and
the at least one circumferential channel (34, 36, 54, 56) is provided in either the first cover (22) or the second cover (24).

5. The motor unit (10) according to claim 4, wherein:
all of the axial channels (20A) are positioned at equal distances from the central axis of the cylindrical middle housing; and
the at least one circumferential channel (34, 36, 54, 56) includes a first circumferential channel (34, 54) that connects adjacent two of the axial channels (20A), and a second circumferential channel (36, 56) that connects two of the axial channels (20A) that are located on both sides of the adjacent two axial channels (20A).

6. The motor unit (10) according to claim 5, wherein in the first cover (22) and the second cover (24), the first circumferential channel (34, 54) is at least partially adjacent to the second circumferential channel (36, 56) in a radial direction.

7. The motor unit (10) according to claim 1, wherein the second cooling medium system (82) includes a third cooling medium channel (100) that connects the supply channel (30) and the discharge channel (32), and a fourth cooling medium channel (102) that is independent of the third cooling medium channel (100) and that connects the supply channel (30) and the discharge channel (32).
